# EUROPEAN PATENT SPECIFICATION

(11) **EP 0 979 832 B1**
(45) Date of publication and mention of the grant of the patent: **22.10.2003**
(21) Application number: 99114823.0
(22) Date of filing: 29.07.1999
(51) Int. Cl.: C08F 214/22, C08F 214/26

(54) **Fluoroelastomers**
Fluoroelastomere
Fluoroélastomères

(30) Priority: 11.08.1998 IT MI981880
(43) Date of publication of application: 16.02.2000
(73) Proprietor: Solvay Solexis S.p.A., 20121 Milano (IT)
(72) Inventor: Wlassics, Ivan, Rapallo, Genova (IT); Apostolo, Marco, Bellinzago, Novara (IT); Albano, Margherita, Milano (IT)
(74) Representative: Sama, Daniele, Dr.

(56) References cited:
- EP-A- 0 845 482
- US-A- 5 151 492

## Description

Curable fluoroelastomers comprising in the chain monomeric units formed by a triazine iodinated derivative having general formula: 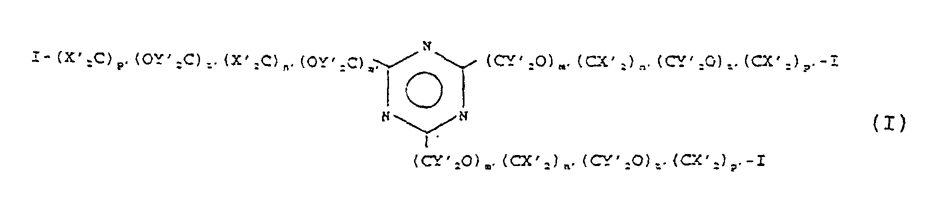 wherein Y' is independently H, Cl, F, CH₃, CF₃; m' and t' are integers selected between 0 and 1, and m' + t' = 0 or 1, preferably m' + t' = 0; p' is an integer and it is equal to 1 when t' = 1, or p' = 0; X' is independently H, Cl, F, alkyl or perfluoroalkyl C₁-C₃, preferably F; n' is an integer comprised between 2 and 20, preferably between 4 and 12, more preferably between 4 and 8.

The present invention relates to new curable fluoroelastomers by peroxidic way having improved mechanical and elastomeric properties combined with improved processability, in particular improved extrudability.

various kinds of fluoroelastomers are known in the art, widely used in all those fields where very good elastomeric properties combined with high thermochemical stability are required, . For a wide description of such products see for instance "Ullmann's Encyclopedia of Industrial Chemistry", vol. A-11, pag.417-429 (1988, VCH Verlagsgesellschaft).

The fluoroelastomer curing can be carried out both by ionic and by peroxide-route. In the former case, to the fluoroelastomer suitable curing agents are added (for example polyhydroxylated compounds) combined with accelerants (e.g. tetraalkylammonium, tetraalkylphosphonium phosphoranamine salts). In the peroxidic curing the polymer must contain curing sites capable to form radicals in the presence of peroxides. To this purpose cure-site monomers containing iodine and/or bromine can be introduced in the polymeric skeleton, as described for example in US-A-4,035,565, US-A-4,745,165 and EP 199,138, or chain transfer agents containing iodine and/or bromine, which generate iodinated and/or brominated end groups can be used in the polymerization phase (see for example US-A-4,243.770 and US-A- 5,173,553).

A drawback of the compounds used for the peroxidic curing is their difficult processability. In particular it is well known that fluoroelastomers cured by peroxidic way show, compared with those cured by ionic way, worse elastomeric properties as shown by the high compression set values. Besides it is noticed a remarkable mould fouling, which decreases the productivity and implies a waste increase.

The need was therefore felt to have available curable fluoroelastomers by peroxidic way having improved mechanical and elastomeric properties combined with an improved extrudability.

The Applicant has surprisingly and unexpectedly found new curable fluoroelastomers with peroxides, having improved mechanical and elastomeric properties combined with improved processability, in particular improved extrudability.

It is an object of the present invention curable fluoroelastoners with peroxides, having iodine atoms at the terminal end, comprising in the chain monomeric units formed by a triazine iodinated derivative having general formula: 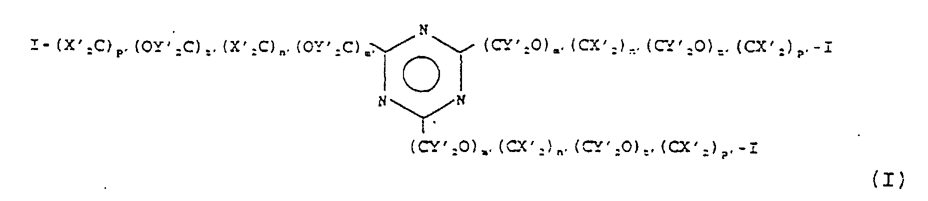 wherein the CY'₂ and CX'₂ groups represent carbon atoms bound to two Y' or X' substituents as defined below; Y' can independently be H, Cl, F, CH₃, CF₃; m' and t' are integers selected between 0 and 1, the sum m' + t' being = 0 or 1, preferably m' + t' = 0; p' is an integer and is 0 or 1, it is equal to 1 when t' = 1; X' can independently be H, Cl, F, alkyl or perfluoroalkyl C₁-C₃, preferably F; n' is an integer in the range 2-20, preferably 4-12, more preferably 4-8.

The preferred compounds of formula (I) are those wherein m' = t' = p' = 0; n' is comprised between 4 and 8; X' = F.

The unit amount in the chain of the triazine iodinated derivatives is generally in the range 0.01-1.0 moles, preferably 0.03-0.5 moles, still more preferably 0.05-0.2% moles per 100 moles of the other monomeric units forming the polymer.

It has been found by the Applicant that. the presence in the chain of the triazine iodinated derivative of general formula (I) allows to obtain polymers having a very narrow molecular weight distribution, determined by GPC. Without to be bound to any theory, the Applicant keeps that this parameter is the important one to obtain an improved extrudability.

It has been unexpectedly found that the new polymers besides an improved processability and extrudability, show a combination also of improved mechanical and elastomeric properties, in particular lower compression set.

The fluoroelastomer base structure can be in particular selected from the following classes of copolymers with two or more monomers:
(1) VDF-based copolymers, wherein VDF is copolymerized with at least one comonomer selected from the following: perfluoroolefins C₂-C₈, such as tetrafluoroethylene (TFE), hexafluoropropene (HFP); chloro- and/or bromo- and/or iodo-fluoroolefins C₂-C₈, such as chlorotrifluoroethylene (CTFE) and bromotrifluoroethylene; (per)fluoroalkylvinylethers (PAVE) CF₂=CFOR_{f}, wherein R_{f} is a (per)-fluoroalkyl C₁-C₆, for example trifluoromethyl, bromodifluoromethyl, pentafluoropropyl; perfluoro-oxyalkylvinylethers CF₂=CFOX, wherein X is a perfluoro-oxyalkyl C₁-C₁₂ having one or more ether groups, for example perfluoro-2-propoxy-propyl; non fluorinated olefins (Ol) C₂-C₈, for instance ethylene and propylene;
(2) TFE-based copolymers, wherein TFE is copolymerized with at least a comonomer selected from the following: (per)fluoroalkylvinylethers (PAVE) CF₂=CFOR_{f}, wherein R_{f} is as above defined; perfluorooxyalkylvinylethers CF₂=CFOX, wherein X is as above defined; fluoroolefins C₂-C₈ containing hydrogen and/or chlorine and/or bromine and/or iodine atoms; non fluorinated olefins (Ol) C₂-C₈.

Preferably the invention fluoroelastomers contain perfluorinated monomers, and preferably the base structure of said fluoroelastomers is selected from the copolymers of class (2), wherein TFE is polymerized with one or more perfluorinated comonomers as above indicated.

Within the classes defined above, the preferred compositions of the monomers forming the fluoroelastomer base structure are the following:
(a) VDF 45-85%, HFP 15-45%, TFE 0-30%; (b) VDF 50-80%, PAVE 5-50%, TFE 0-20%; (c) VDF 20-30%, Ol 10-30%, HFP e/o PAVE 18-27%, TFE 10-30%; (d) TFE 50-80%, PAVE 20-50%; (e) TFE 45-65%, Ol 20-55%, VDF 0-30%; (f) TFE 32-60%, Ol 10-40%, PAVE 20-40%; (g) TFE 33-75%, PAVE 15-45%, VDF 5-30%.

Specific compositions particularly preferred are the following:
- (d) TFE 50-80%, PAVE 20-50%;
- (g) TFE 33-75%, PAVE 15-45%, VDF 5-30%.

The fluoroelastomers optionally comprise also monomeric units deriving from a bis-olefin having general formula: 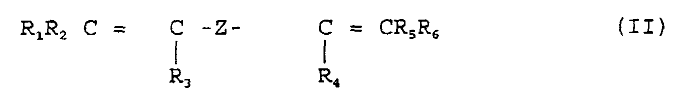 wherein:
R₁, R₂, R₃, R₄, R₅, R₆, equal to or different from *each* other, are H or alkyls C₁-C₅;
Z is an alkylenic or cycloalkylenic C₁-C₁₈ radical, linear or branched, optionally containing oxygen atoms, preferably at least partially fluorinated, or a (per)fluoropolyoxyalkylene radical.

In formula (II), Z is preferably a perfluoroalkylene C₄-C₁₂ radical, while R₁, R₂, R₃, R₄, R₅, R₆ are preferably hydrogen.

When Z is a (per)fluoropolyoxyalkylene radical, it has preferably th formula:

- (Q)ₚ-CF₂O-(CF₂CF₂O)ₘ(CF₂O)ₙ-CF₂-(Q)ₚ- (III)

wherein: Q is an alkylene or oxyalkylene C₁-C₁₀ radical; p is 0 or 1; m and n are integers such that the m/n ratio is in the range 0.2-5 and the molecular weight of said (per)fluoropolyoxyalkylene radical is in the range 500-10,000, preferably 1,000-4,000. Preferably Q is selected from:
-CH₂OCH₂- ; -CH₂O(CH₂CH₂O)ₛCH₂-, s is an integer from 1 to 3.

The formula (II) bis-olefins wherein Z is an alkylene or cycloalkylene radical can be prepared according to what described, for example, by I.L. Knunyants et al in Izv. Akad. Nauk. SSSR, Ser. Khim., 1964(2), 384-6, while the bis-olefins containing (per)fluoropolyoxyalkylene sequences are described in US-A-3,810,874.

The unit amount in the polymeric chain deriving from such bis-olefins is generally in the range 0.01-1.0 moles, preferably 0.03-0.5 moles, still more preferably 0.05-0.2% moles per 100 moles of the other above mentioned monomeric units forming the polymer base structure.

The fluoroelastomers object of the present invention are curable by peroxidic way, wherefore they, in addition to the iodinated end groups deriving from the triazine derivative, can optionally contain in the chain iodine and/or bromine atoms. The introduction of such iodine and/or bromine atoms can be achieved by addition, in the reaction mixture, of brominated and/or iodinated cure-site comonomers, such as bromo- and/or iodo-olefins having from 2 to 10 carbon atoms (as described for example in US-A-4,035,565 and US-A-4,694,045), or iodo- and/or bromo-fluoroalkylvinylethers (as described in US-A-4,745,165, US-A-4,564,662 and EP 199,138), in such amounts wherefore the cure-site comonomers content in the final product is generally in the range 0.05-2 moles per 100 moles of the other base monomeric units.

The process for preparing the fluoroelastomers object of the present invention can be carried out by copolymerization of the monomers in aqueous emulsion according to well known methods in the art, in the presence of radical initiators (for example alkaline or ammonium persulphates, perphosphates, perborates or percarbonates) optionally in association with ferrous, cuprous or silver salts, or of other easily oxidable metals. In the reaction medium also various surfactants are usually present, among which the fluorinated surfactants of formula R_{f2}-X₂⁻M⁺ are particularly preferred, wherein R_{f2} is a (per)fluoroalkyl chain C₅-C₁₆ or a (per)fluoropolyoxyalkylene chain, X₂ ⁻ is -COO⁻ or -SO₃⁻, M⁺ is selected from: H⁺, NH₄⁺, alkaline metal ion. Among the most commonly used, ammonium perfluorooctanoate, (per)fluoropolyoxyalkylenes ended with one or more carboxylic groups can be mentioned.

The triazine derivative (I) amount to be added to the reaction mixture depends on the amount which must be present in the final product, considering that at the low amounts foreseen according to the present invention practically the triazine derivative present in the reaction medium completely enters into the chain.

The fluoroelastomer is isolated, when the polymerization is over, with conventional methods such as coagulation by addition of electrolytes or by cooling.

Alternatively to the emulsion polymerization, the polyymerization can be carried out in bulk or in suspension, in an organic liquid where a suitable radical initiator is present, according to well known techniques.

The polymerization is generally carried out at temperatures in the range 25-150°C, under pressure up to 10 MPa.

The preparation of the fluoroelastomers of the present invention is preferably carried out in aqueous emulsion in the presence of a perfluoropolyoxyalkylene emulsion, dispersion or microemulsion, according to US-A-4,789,717 and US-A-4,864,006.

The curing by peroxidic route of the invention fluoroelastomers to obtain cured fluoroelastomers is carried out accordig to known techniques, by addition of a peroxide capable to generate radicals by heating. Among the most commonly used there are dialkylperoxides, such as for instance di-terbutyl-peroxide and 2,5-dimethyl-2,5-di(terbutylperoxy)hexane; dicumyl peroxide; dibenzoyl peroxide; diterbutyl perbenzoate; di[1,3-dimethyl-3-(terbutylperoxy)butyl]carbonate. Other peroxidic systems are described, for example, in EP 136,596 and EP 410,351.

To the curable fluoroelastomer compound other additives are then optionally added, such as:
(a) curing coagents, in amouns generally in the range 0.5-10%, preferably 1-7%, by weight with respect to the polymer; among them those commonly used are: triallyl-cyanurate; triallyl-isocyanurate (TAIC); tris(diallylamine)-s-triazine; triallylphosphite; N,N-diallyl-acrylamide; N,N-,N',N'-tetraallyl-malonamide; trivinyl-isocyanurate; 2,4,6-trivinyl-methyltrisiloxane; N,N'bisallylbicyclo-oct-7-ene-disuccinimide (BOSA); bis olefin of formula (I), triazines having general formula 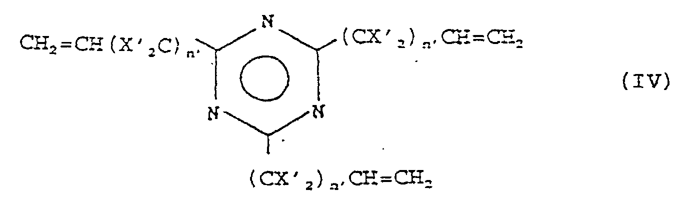 wherein CX'₂, X' and n' are as above defined in formula (I).
   Preferably in formula (IV) n' is comprised between 4 and 8; TAIC is particularly preferred;
(b) a metal compound, in amounts in the range 1-15% by weight, prefrably 2-10%, with respect to the polymer, selected from divalent metal oxides or hydroxides, such as for instance Mg, Zn, Ca or Pb, optionally associated with a monovalent or bivalent metal salt of an organic or inorganic weak acid, such as for instance Ba, Na, K, Pb, Ca stearates, benzoates, carbonates, oxalates or phosphites;
(c) mineral fillers such as carbon black, barium sulphate, PTFE with a particle diameter lower than 300 nm, preferably lower than 100 nm, still more preferably from 30 to 70 nm; PTFE having 30-70 nm sizes is preferably used; alternatively to polytetrafluoroethylene (PTFE), TFE plastomeric polymers, for example TFE polymers modified with amounts from 0.01% to 10% by moles, preferably from 0.01 to 4% by moles of a vinylether, preferably perfluoromethylvinylether, perfluoroethylvinylether, perfluoropropylvinylether can be used; preferred plastomeric polymers are the TFE ones modified with MVE;
(d) other conventional additives, such as thickeners, pigments, antioxidants, and stabilizers.

It is also possible to use mixed curing systems, both ionic and peroxidic, as described in EP 136,596.

The Applicant has found that the invention fluoroelastomers show besides an improved extrudability also a very good processability, which allows to obtain a higher productivity and reduction of the processing wastes.

With the fluoroelastomers of the present invention it is possible to prepare manufactured articles as fuel hoses, 0-rings, shaft seals, gaskets, preferably fuel hoses having improved compression set and a very good aspect of the extruded product (Garvey rating).

The triazine derivatives of formula (I) can be prepared according to EP 860,436 starting from compounds of formula I-(CX'₂-CY'₂O)_{m'}-(CX'₂)_{n'+1-m'}-I, wherein the CY'₂ and CX'₂ groups, X', Y', m', n' are as above defined in formula (I).

The present invention will be better illustrated by the following working examples.

### EXAMPLE 1

### CHARACTERIZATION

### EXAMPLE 1a

### Molecular Weight Determination by GPC

Average nolecular weights Mn (number), Mw (weight), and Mz were determined by GPC, using a column series Ultrastyragel®, termostatted at 35°C, using tetrahydrofuran as eluent and a Rifractive Index detector.

### EXAMPLE 1b

### Mooney Viscosity ML(1+10') Determination

Mooney Viscosity ML(1+10') was determined according to the ASTM D1646 method at a temperature of 121°C.

### EXAMPLE 1c

### Curing Curve Determination

Curing curve on fluoroelastomer obtained according to Examples 2 and 3, hereinafter described, was determined by Oscillating Disk Rheometer (ODR) (Model 100 S) by Monsanto, according to the ASTM D2084-81 method, operating at 177°C with an oscillation amplitude of 3°.

Data are listed in the Tables:
ML (lower torque) ; MH (higher torque); t₆₂ (time required for a torque increase of 2 lb.in over ML) 1lb = 0.435 Kg ; t₈₅₀ (time required for a torque increase of 50 lb.in over ML) 1 in = 2,54 cm ; t'₉₀ (time required for a torque increase of 50% and 90%, respectively).

On the cured product
- compression set on O-ring at 200°C for 70 hrs after post-curing at 200°C for 8 hrs (ASTM D395);
- mechanical properties of post-curing at 200°C for 8 hrs (ASTM D412-83)
were determined and are listed in the Tables.

### EXAMPLE 1d

### Garvey Rating Determination

Garvey rating was determined according to the ASTM D2230-78 method.

### EXAMPLE 2

### Fluoroelastomer syntesis according to the invention by monomer polymerization in the presence of a triazine iodinate derivative

In a 5 l autoclave, equipped with a stirrer working at 630 rpm, 3.5 l of demineralized water and 182 ml of perfluoropolyoxyalkylene microemulsion, were introduced, after evacuation. The microemulsion was previously prepared by mixing:
- 39.3 ml of a perfluoropolyoxyalkylene with an acid end group of formula:

   CF₃O(CF₂-CF(CF₃)O)ₙ(CF₂O)ₘCF₂COOH

   wherein m/n = 10, having average molecular weight of 600;
- 39.3 ml of an NH₄OH aqueous solution at 30% by volume;
- 78.8 ml of demineralized water;
- 24.4 ml of Galden® DO2 of formula :

   CF₃O(CF₂-CF(CF₃)O)ₙ(CF₂O)ₘCF₃

   wherein m/n = 20, having average molecular weight of 450.

The autoclave was then heated to 80°C and maintained at such temperature for the whole reaction. The following monomer mixture was then fed:

| | |
|---|---|
| vinylidene fluoride (VDF) | 47.5% by moles |
| hexafluoropropene (HFP) | 45 % " |
| tetrafluoroethylene (TFE) | 7.5% " |

just to bring the pressure up to 21 bar.
- 0.175 g of amonium persulphate (APS) as initiator;
- 14.3 g of the triazine derivative of formula (V): 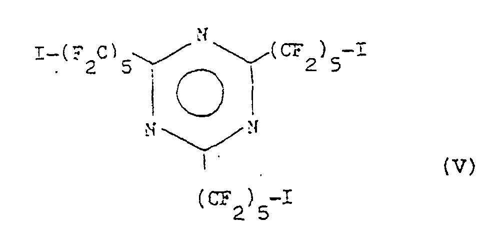 were then introduced into the autoclave.

The pressure of 21 bar was maintained constant during the whole polymerization course by feeding a mixture composed by:

| | |
|---|---|
| VDF | 70% by moles |
| HFP | 19% " |
| TFE | 11% " |

After 280 minutes of reaction, the autoclave was cooled, the latex discharged. 450 g/l of product having polymer Mooney viscosity, ML(1+10) at 121°C, equal to 40, were thus obtained. The iodine percentage in the polymer is equal to 0.2% by weight. The molar composition determined by F-NMR is the following:

| | |
|---|---|
| VDF | 71 % by moles |
| HFP | 17.5% " |
| TFE | 11.5% " |

The obtained latex was coagulated, dried and then cured by peroxidic process. Characteristics of the polymer and of the cured compound are listed in Tables 1 and 2.

Specifically it is noted that the invention fluoroelastomer shows a very narrow molecular weight distribution (Table 1) and Garvey rating and compression set more favourable values when referred to the comparison fluoroelastomer (Table 2).

### EXAMPLE 3 (comparative)

### Fluoroelastomer syntesis according to the prior art by polymerizing the monomers in the amount foreseen in the previous Example 1 in the presence of an aliphatic diiodinate derivative

Following the same procedure described for the polymerization 1, a polymer of the same kind was prepared wherein a diiodinate derivative was used in an amount based on the iodine moles equivalent to those of the triazine derivative of Example 1.

The 1,6-diiodoperfluorohexane amount was of 9.8 g.

After 210 minutes of reaction, the autoclave was cooled, the latex discharged. 441 g/l of product having polymer Mooney viscosity, ML(1+10) at 121°C, equal to 44, were thus obtained. The iodine percentage in the polymer is equal to 0.2% by weight. The molar composition determined by NMR is the following:

| | |
|---|---|
| VDF | 70.5% by moles |
| HFP | 18.0% " |
| TFE | 11.5% " |

The obtained latex was coagulated, dried and then cured by peroxidic process. Characteristics of the polymer and of the cured compound are listed in Tables 1 and 2.

**TABLE 1**

| EXAMPLE | 2 | 3^{(*)} |
|---|---|---|
| Average molecular weights (method GPC) and polydispersity | | |
| Mn X 10⁻³ | 116 | 120 |
| Mw X 10⁻³ | 220 | 276 |
| Mz X 10⁻³ | 400 | 552 |
| Mw/Mn | 1,9 | 2,3 |

| | | |
|---|---|---|
| ^{(*)} comparative | | |

**TABLE 2**

| EXAMPLE | 2 | 3^{(*)} |
|---|---|---|
| Compound composition | | |
| Polymer (g) | 100 | 100 |
| Luperco^{(R)} 101 XL (phr) | 2 | 2 |
| Drimix^{(R)} TAIC ( " ) | 4,5 | 4,5 |
| ZnO ( " ) | 4 | 4 |
| Akrochem blue 602C ( " ) | 0,3 | 0,3 |
| BaSO4 ( " ) | 35 | 35 |
| Tremin 283 600 Est ( " ) | 35 | 35 |

| Compound characteristics | | |
|---|---|---|
| *ODR 177°C arc 3, 12' (ASTM D2084-81) ML (pounds·inch)^{(**)} | 10 | 12 |
| MH ( " ) | 108 | 95 |
| tₛ₂ (sec) | 45,5 | 57 |
| tₛ₅₀ ( " ) | 78,5 | 90 |
| t'₉₀ ( " ) | 100 | 130 |

| Extrudibility tests (ASTM D-2230-78) | | |
|---|---|---|
| Flow rate (g/min) (Method B) Garvey rating (Method A, System B) | 10 | 7 |

| After post-curing in stove at 230°C for 24 hrs characteristics | | |
|---|---|---|
| *MECHANICAL PROPERTIES (ASTM D412-83) | | |
| Modulus at 100% (MPa) | 5,0 | 3,5 |
| Stress at break (MPa) | 20,6 | 19,0 |
| Elongation at break (%) | 299 | 320 |
| Hardness Shore A (points) *COMPRESSION SET at 200°C for 70 hrs (ASTM D395 Method B) | 73 | 67 |
| O-ring 214 (%) | 44 | 54 |

| | | |
|---|---|---|
| ^{(*)} comparative | | |
| (**) 1 pound = 0.435 Kg. 1 inch = 2,54 cm | | |

## Claims

1. Curable fluoroelastomers with peroxides, having iodine atoms in terminal position, comprising in the chain monomeric units formed by a triazine iodinated derivative having general formula: 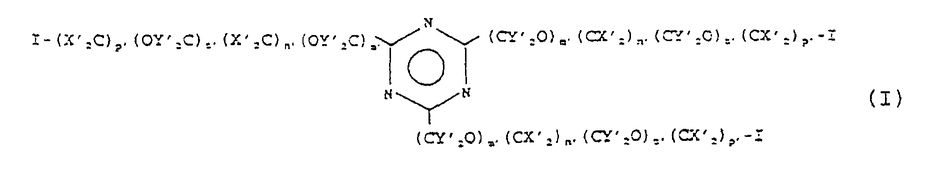 wherein the CY'₂ and CX'₂ groups represent carbon atoms bound to two Y' or X' substituents; Y' can independently be H, Cl, F, CH₃, CF₃; m' and t' are integers selected between 0 and 1, m' + t' = 0 or 1, preferably m' + t' = 0; p' is an integer and is 0 or 1, it is equal to 1 when t' = 1; X' is independently H, Cl, F, alkyl or perfluoroalkyl C₁-C₃, preferably F; n' is an integer in the range 2-20, preferably 4-12, more preferably 4-8.

2. Fluoroelastomers according to claim 1 wherein the preferred compounds of formula (I) are those in which m' = t' = p' = 0; n' is in the range 4-8; X' = F.

3. Fluoroelastomers according to claims 1 and 2 wherein the unit amount in the chain of the triazine iodinated derivatives is in the range 0.01-1.0 moles, preferably 0.03-0.5 moles per 100 moles of the other monomeric units forming the polymer.

4. Fluoroelastomers according to claims 1-3 wherein the fluoroelastomer base structure is selected from the following classes of copolymers:
(1) VDF-based copolymers, wherein VDF is copolymerized with at least a comonomer selected from the following: perfluoroolefins C₂-C₈; chloro- and/or bromo- and/or iodo-fluoroolefins C₂-C₃; (per)fluoroalkylvinylethers (PAVE) CF₂=CFOR_{f}, wherein R_{f} is a (per)fluoroalkyl C₁-C₆; perfluorooxyalkylvinylethers CF₂=CFOX, wherein X is a perfluorooxyalkyl _{C1}-C₁₂ having one or more ethereal groups; non fluorinated olefins (Ol) C₂-C₈;
(2) TFE-based copolymers, wherein TFE is copolymerized with at least a comonomer selected from the following:
(per)fluoroalkylvinylethers (PAVE) CF₂=CFOR_{f}, wherein R_{f} is as above defined; perfluorooxyalkylvinylethers CF₂=CFOX, wherein X is as above defined; fluoroolefins C₂-C₈ containing hydrogen and/or chlorine and/or bromine and/or iodine atoms; non fluorinated olefins (Ol) C₂-C₈.

5. Fluoroelastomers according to claim 4 wherein the preferred compositions of the monomers forming the basic structure of said fluoroelatomers are the following:
(a) VDF 45-85%, HFP 15-45%, TFE 0-30%; (b) VDF 50-80%, PAVE 5-50%, TFE 0-20%; (c) VDF 20-30%, Ol 10-30%, HFP e/o PAVE 18-27%, TFE 10-30%; (d) TFE 50-80%, PAVE 20-50%; (e) TFE 45-65%, Ol 20-55%, VDF 0-30%; (f) TFE 32-60%, Ol 10-40%, PAVE 20-40%; (g) TFE 33-75%, PAVE 15-45%, VDF 5-30%.

6. Fluoroelastomers according to claim 5 wherein the monomer compositions are the following:
(d) TFE 50-80%, PAVE 20-50%; (g) TFE 33-75%, PAVE 15-45%, VDF 5-30%.

7. Fluoroelastomers according to claims from 4 to 6 wherein the fluoroelastomer base structue is selected from the copolymers of class (2).

8. Fluoroelastomers according to claims from 4 to 7 formed by perfluorinated monomers.

9. Fluoroelastomers according to claims 1-8, comprising monomeric units deriving from a bis-olefin having general formula: 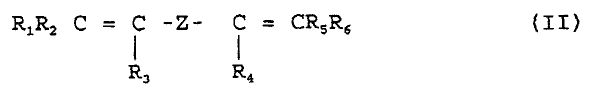 wherein:
R₁, R₂, R₃, R₄, R₅, R₆, equal to or different from each other, are H or alkyls C₁-C₅;
Z is an alkylene or cycloalkylene C₁-C₁₈ radical, linear or branched, optionally containing oxygen atoms, preferably at least partially fluorinated, or a (per)fluoropolyoxyalkylene radical.

10. Fluoroelastomers according to claim 9 wherein in formula (II), Z is a perfluoroalkylene C₄-C₁₂ radical, and R₁, R₂, R₃, R₄, R₅, R₆ are hydrogen.

11. Fluoroelastomers according to claim 9 wherein z is a (per)fluoropolyoxyalkylene radical, having the formula:
-(Q)ₚ-CF₂O-(CF₂CF₂O)ₘ(CF₂O)ₙ-CF₂-(Q)ₚ- (III)
wherein: Q is an alkylene or oxyalkylene C₁-C₁₀ radical; p is 0 or 1; m and n are integers such that the m/n ratio is in the range 0.2-5 and the molecular weight of said (per)fluoropolyoxyalkylene radical is in the range 500-10,000.

12. Fluoroelastomers according to claims 9-11, wherein the unit amount in the chain deriving from such bis-oelfins is in the range 0.01-1.0 moles per 100 moles of the other basic monomeric units.

13. Fluoroelastomers according to clains 1-12 cured by peroxidic way.

14. Fluoroelastomers according to claim 13 wherein in the curing blend are added:
(a) curing coagents, in amounts generally in the range 0.5- 10%, preferably 1-7%, by weight with respect to the polymer selected from: triallyl-cyanurate; triallyl-isocyanurate (TAIC); tris(diallylamine)-s-triazine; triallylphosphite; N,N-diallyl-acrylamide; N,N,N',N'-tetraallyl-malonamide; trivinyl-isocyanurate; 2,4,6-trivinyl-methyltrisiloxane; N,N'-bisallylbicyclo-oct-7-ene-disuccinimide (BOSA); bis olefin of formula (I), triazines having general formula 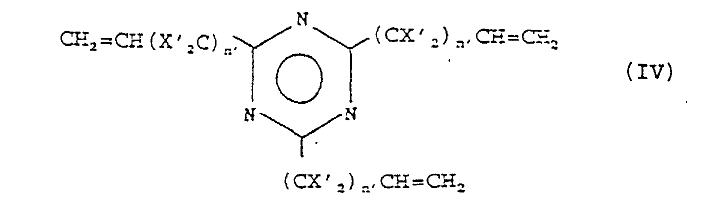 wherein CX'₂, X' and n' are as above defined in formula (I).
(b) a metal compound, in amounts in the range 1-15%, by weight with respect to the polymer, selected from divalent metal oxides or hydroxides, optionally associated with a monovalent or bivalent metal salt of an organic or inorganic weak acid;
(c) mineral fillers selected from carbon black, barium sulphate, PTFE with a particle diameter lower than 300 nm; optionally TFE polymers modified with amounts from 0.01% to 10% by moles of a vinylether;
(d) conventional additives, such as thickeners, pigments, antioxidants, stabilizers.

15. Fluoroelastomers according to claim 14 wherein the component (c) is PTFE, optionally TFE polymers modified with amounts from 0.01% to 10% by moles of a vinylether, with a particle diameter in the range 30-70 nm.

16. Use of the fluoroelastomers of claims 1-15 for the preparation of manufactured articles such as fuel hoses, 0-rings, shaft seals, gaskets.

17. Use of the fluoroelastomers according to claim 16 for the preparation of fuel hoses.

18. Process for obtaining fluoroelastomers of claims 1-12 wherein the monomer polymerization is carried out in aqueous emulsion, in bulk or in suspension.

19. Process for obtaining fluoroelastomers according to claim 18 wherein the monomer polymerization is carried out in aqueous emulsion in the presence of a perfluoropolyoxyalkylene emulsion, dispersion or microemulsion.

20. Process for obtaining fluoroelastomers according to claim 19 wherein the monomer polymerization is carried out in perfluoropolyoxyalkylene microemulsion.

## Patentansprüche

1. Mit Peroxiden härtbare Fluorelastomere mit endständigen Iodatomen, welche in der Kette Monomereinheiten umfassen, die gebildet sind aus einem iodierten Triazinderivat der allgemeinen Formel: 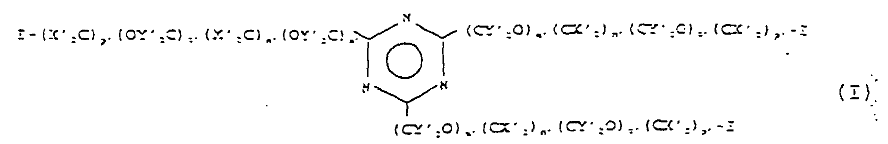 wobei die CY'₂- und CX'₂-Gruppen Kohlenstoffatome bedeuten, die an zwei Y'- oder X'-Substituenten gebunden sind; Y' unabhängig H, Cl, F, CH₃; CF₃ bedeuten kann; m' und t' ganze Zahlen sind, ausgewählt aus 0 und 1, m' + t' = 0 oder 1, vorzugsweise m' + t' = 0; p' eine ganze Zahl ist und 0 oder 1 ist, wobei es gleich 1 ist, wenn t' = 1; X' unabhängig H, Cl, F, C₁-C₃-Alkyl oder -Perfluoralkyl, vorzugsweise F ist; n' eine ganze Zahl zwischen 2-20, bevorzugt 4-12, besonders bevorzugt 4-8 ist.

2. Fluorelastomere nach Anspruch 1, wobei die bevorzugten Verbindungen der Formel (I) solche sind, in denen m' = t' = p' = 0; n' zwischen 4-8 liegt; X' = F.

3. Fluorelastomere nach den Ansprüchen 1 und 2, wobei die Menge der Einheiten der iodierten Triazinderivate in der Kette zwischen 0,01-1,0 mol, vorzugsweise 0,03-0,5 mol pro 100 mol der anderen Monomereinheiten liegt, die das Polymer bilden.

4. Fluorelastomere nach den Ansprüchen 1-3, wobei die Grundstruktur des Fluorelastomers ausgewählt ist aus den folgenden Copolymerklassen:
(1) VDF-basierte Copolymere, wobei VDF mit wenigstens einem Comonomer copolymerisiert ist, das aus den folgenden ausgewählt ist: C₂-C₈-Perfluorolefinen; C₂-C₃-Chlor- und/oder -Brom- und/oder -Iodfluorolefinen; (Per)fluoralkylvinylethern (PAVE) , CF₂=CFOR_{f}, wobei R_{f} ein C₁-C₆-(Per)fluoralkyl ist; Perfluoroxyalkylvinylethern, CF₂=CFOX, wobei X ein C₁-C₁₂-Perfluoroxyalkyl mit ein oder mehreren Ethergruppen ist; nichtfluorierten C₂-C₈-Olefinen (Ol);
(2) TFE-basierte Copolymere, wobei TFE mit wenigstens einem Comonomer copolymerisiert ist, das aus den folgenden ausgewählt ist:
(Per)fluoralkylvinylethern (PAVE), CF₂=CFOR_{f},
wobei R_{f} wie oben definiert ist; Perfluoroxyalkylvinylethern, CF₂=CFOX, wobei X wie oben definiert ist; C₂-C₈-Fluorolefinen, die Wasserstoff und/oder Chlor- und/oder Bromund/oder Iodatome enthalten; nichtfluorierten C₂-C₈-Olefinen (Ol).

5. Fluorelastomere nach Anspruch 4, wobei die bevorzugten Zusammensetzungen der Monomere, die die Grundstruktur dieser Fluorelastomere bilden, die folgenden sind:
(a) VDF 45-85%, HFP 15-45%, TFE 0-30%; (b) VDF 50-80%, PAVE 5-50%, TFE 0-20%; (c) VDF 20-30%, Ol 10-30%, HFP und/oder PAVE 18-27%, TFE 10-30%; (d) TFE 50-80%, PAVE 20-50%; (e) TFE 45-65%, Ol 20-55%, VDF 0-30%; (f) TFE 32-60%, Ol 10-40%, PAVE 20-40%; (g) TFE 33-75%, PAVE 15-45%, VDF 5-30%.

6. Fluorelastomere nach Anspruch 5, wobei die Monomerzusammensetzungen die folgenden sind:
(d) TFE 50-80%, PAVE 20-50%; (g) TFE 33-75%, PAVE 15-45%, VDF 5-30%.

7. Fluorelastomere nach den Ansprüchen 4 bis 6, wobei die Grundstruktur der Fluorelastomere ausgewählt ist aus den Copolymeren der Klasse (2).

8. Fluorelastomere nach den Ansprüchen 4 bis 7, welche aus perfluorierten Monomeren gebildet sind.

9. Fluorelastomere nach den Ansprüchen 1-8, welche Monomereinheiten umfassen, die sich ableiten von einem Bisolefin der allgemeinen Formel: 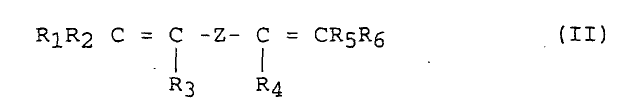 wobei:
R₁, R₂, R₃, R₄, R₅, R₆, die gleich oder voneinander verschieden sind, H oder C₁-C₅-Alkyl bedeuten;
Z einen linearen oder verzweigten, bevorzugt wenigstens teilweise fluorierten C₁-C₁₈-Alkylen- oder -Cycloalkyenrest, der gegebenenfalls Sauerstoffatome enthält, oder einen (Per)fluorpolyoxyalkylenrest bedeutet.

10. Fluorelastomere nach Anspruch 9, wobei in Formel (II) Z ein C₄-C₁₂-Perfluoralkylenrest ist und R₁, R₂, R₃ R₄, R₅, R₆ Wasserstoff bedeuten.

11. Fluorelastomere nach Anspruch 9, wobei Z ein (Per)fluorpolyoxyalkylenrest der Formel ist:
-(Q)ₚ-CF₂O-(CF₂CF₂O)ₘ(CF₂O)ₙ-CF₂-(Q)ₚ- (III)
wobei: Q ein C₁-C₁₀-Alkylen- oder -Oxyalkylenrest ist; p 0 oder 1 ist; m und n solche ganze Zahlen sind, daß das Verhältnis von m/n zwischen 0,2-5 liegt und das Molekulargewicht des (Per)fluorpolyoxyalkylenrests zwischen 500-10.000 liegt.

12. Fluorelastomere nach den Ansprüchen 9-11, wobei die Menge der Einheiten in der Kette, die sich von solchen Bisolefinen ableiten, zwischen 0,01-1,0 mol pro 100 mol der anderen monomeren Grundeinheiten liegt.

13. Fluorelastomere nach den Ansprüchen 1-12, welche peroxidisch gehärtet sind.

14. Fluorelastomere nach Anspruch 13, wobei der Aushärtungsmischung zugesetzt sind:
(a) Coagenzien zum Aushärten, in Mengen von im allgemeinen zwischen 0,5-10 Gew.-%, vorzugsweise 1-7 Gew.-%, bezogen auf das Polymer, ausgewählt aus: Triallylcyanurat; Triallylisocyanurat (TAIC); Tris(diallylamin)-s-triazin; Triallylphosphit; N,N-Diallylacrylamid; N,N,N',N'-Tetraallylmalonamid; Trivinylisocyanurat; 2,4,6-Trivinylmethyltrisiloxan; N,N'-Bisallylbicyclo-oct-7-en-disuccinimid (BOSA); Bisolefin der Formel (I), Triazinen der allgemeinen Formel 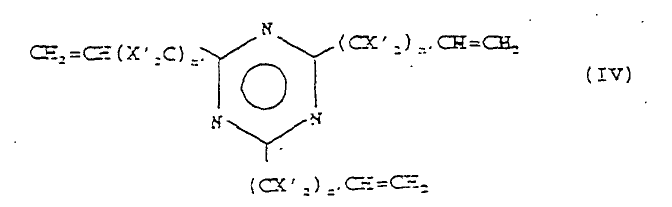 wobei CX'₂, X' und n' die oben in Formel (I) definierte Bedeutung haben;
(b) eine Metallverbindung, in Mengen zwischen 1-15 Gew.-%, bezogen auf das Polymer, ausgewählt aus zweiwertigen Metalloxiden oder -hydroxiden, gegebenenfalls in Assoziation mit einem einwertigen oder zweiwertigen Metallsalz einer schwachen organischen oder anorganischen Säure;
(c) mineralische Füllstoffe, ausgewählt aus Carbon Black, Bariumsulfat, PTFE mit einem Teilchendurchmesser von weniger als 300 nm; gegebenenfalls mit Vinylether in Mengen von 0,01 bis 10 Mol-% modifizierten TFE-Polymeren;
(d) übliche Additive wie Verdickungsmittel, Pigmente, Antioxidantien, Stabilisatoren.

15. Fluorelastomere nach Anspruch 14, wobei die Komponente (c) ist: PTFE, gegebenenfalls mit Vinylether in Mengen von 0,01 bis 10 Mol-% modifizierte TFE-Polymere mit einem Teilchendurchmesser zwischen 30-70 nm.

16. Verwendung der Fluorelastomere der Ansprüche 1-15 zur Herstellung von Industrieartikeln wie Tankschläuchen, O-Ringen, Wellendichtungen, Dichtungen.

17. Verwendung der Fluorelastomere nach Anspruch 16 zur Herstellung von Tankschläuchen.

18. Verfahren zur Herstellung von Fluorelastomeren der Ansprüche 1-12, wobei die Monomerpolymerisation in wäßriger Emulsion, in Masse oder in Suspension durchgeführt wird.

19. Verfahren zur Herstellung von Fluorelastomeren nach Anspruch 18, wobei die Monomerpolymerisation in wäßriger Emulsion in Gegenwart einer Perfluorpolyoxyalkylen-Emulsion, -Dispersion oder -Mikroemulsion durchgeführt wird.

20. Verfahren zur Herstellung von Fluorelastomeren nach Anspruch 19, wobei die Monomerpolymerisation in einer Perfluorpolyoxyalkylen-Mikroemulsion durchgeführt wird.

## Revendications

1. Fluoroélastomères durcissables avec des peroxydes, ayant des atomes d'iode en position terminale, comprenant dans la chaîne des motifs monomères formés par un dérivé iodé de la triazine ayant la formule générale : 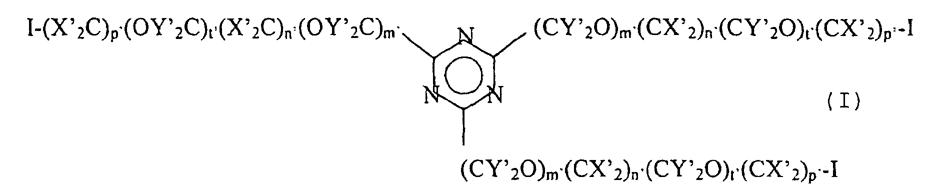 dans laquelle les groupes CY'₂ et CX'₂ représentent des atomes de carbone liés à deux substituants Y' ou X' ; Y' peut d'une manière indépendante être H, Cl, F, CH₃, CF₃ ; m' et t' sont des entiers choisis entre 0 et 1, m' + t' = 0 ou 1, de préférence m' + t' = 0 ; p' est un entier et vaut 0 ou 1, il est égal à 1 quand t' = 1 ; X' est d'une manière indépendante H, Cl, F, un groupe alkyle ou perfluoralkyle en C₁ à C₃, de préférence F ; n' est un entier compris dans la plage de 2 à 20, de préférence de 4 à 12, plus particulièrement de 4 à 8.

2. Fluoroélastomères selon la revendication 1, dans lesquels les composés préférés de Formule (I) sont ceux dans lesquels m' = t' = p' = 0 ; n' est compris dans la plage de 4 à 8 ; X' = F.

3. Fluoroélastomères selon les revendications 1 et 2, dans lesquels la quantité des motifs, dans la chaîne, des dérivés iodés de la triazine, est comprise dans la plage de 0,01 à 1,0 mole, de préférence de 0,03 à 0,5 mole, pour 100 moles des autres motifs monomères formant le polymère.

4. Fluoroélastomères selon les revendications 1 à 3, dans lesquels la structure de base du fluoroélastomère est choisie parmi les classes suivantes de copolymères :
(1) les copolymères à base de VDF, où le VDF est copolymérisé avec au moins un comonomère choisi parmi les suivants : les perfluorooléfines en C₂ à C₈ ; les chloro- et/ou bromo- et/ou iodo-fluorooléfines en C₂ à C₃ ; les (per)fluoroalkylvinyléthers (PAVE) CF₂=CFOR_{f}, où R_{f} est un groupe (per)fluoroalkyle en C₁ à C₆ ; les perfluorooxyalkylvinyléthers CF₂=CFOX où X est un groupe perfluorooxyalkyle en C₁ à C₁₂ ayant un ou plusieurs groupes éther ; les oléfines (Ol) non fluorées en C₂ à C₈ ;
(2) les copolymères à base de TFE, où le TFE est copolymérisé avec au moins un comonomère choisi parmi les suivants : les (per)fluoroalkylvinyléthers (PAVE) CF₂=CFOR_{f} où R_{f} est tel que défini ci-dessus ; les perfluorooxyalkylvinyléthers CF₂=CFOX où X est tel que défini ci-dessus ; les fluorooléfines en C₂ à C₈ contenant des atomes d'hydrogène et/ou de chlore et/ou de brome et/ou d'iode ; les oléfines (Ol) non fluorées en C₂ à C₈.

5. Fluoroélastomères selon la revendication 4, dans lesquels les compositions préférées des monomères formant la structure de base desdits fluoroélastomères sont les suivantes : (a) VDF 45-85 %, HFP 15-45 %, TFE 0-30 % ; (b) VDF 50-80 %, PAVE 5-50 %, TFE 0-20 % ; (c) VDF 20-30 %, Ol 10-30 %, HFP e/o PAVE 18-27 %, TFE 10-30 % ; (d) TFE 50-80 %, PAVE 20-50 %, (e) TFE 45-65 %, Ol 20-55 %, VDF 0-30 % ; (f) TFE 32-60 %, Ol 10-40 %, PAVE 20-40 % ; (g) TFE 33-75 %, PAVE 15-45 %, VDF 5-30 %.

6. Fluoroélastomères selon la revendication 5, dans lesquels les compositions des monomères sont les suivantes :
(d) TFE 50-80 %, PAVE 20-50 % ; (g) TFE 33-75 %, PAVE 15-45 %, VDF 5-30 %.

7. Fluoroélastomères selon les revendications 4 à 6, dans lesquels la structure de base des fluoroélastomères est choisie parmi les copolymères de la classe (2).

8. Fluoroélastomères selon les revendications 4 à 7, formés de monomères perfluorés.

9. Fluoroélastomères selon les revendications 1 à 8, comprenant des motifs monomères qui dérivent d'une bisoléfine ayant la formule générale : 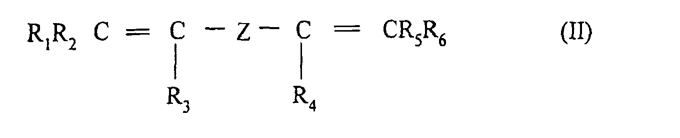 dans laquelle
R₁, R₂, R₃, R₄, R₅, R₆ sont identiques ou différents et représentent chacun H ou un groupe alkyle en C₁ à C₅ ;
Z est un radical alkylène ou cycloalkylène en C₁ à C₁₈, à chaîne droite ou ramifiée, contenant éventuellement des atomes d'oxygène, de préférence un radical au moins partiellement fluoré, ou un radical (per)fluoropolyoxyalkylène.

10. Fluoroélastomères selon la revendication 9, dans lesquels, dans la Formule (II), Z est un radical perfluoroalkylène en C₄ à C₁₂, et R₁, R₂, R₃, R₄, R₅ et R₆ sont des atomes d'hydrogène.

11. Fluoroélastomères selon la revendication 9, dans lesquels Z est un radical (per)fluoropolyoxyalkylène ayant la formule :
-(Q)ₚ-CF₂O-(CF₂CF₂O)ₘ(CF₂O)ₙ-CF₂-(Q)ₚ- (III)
où Q est un radical alkylène ou oxyalkylène en C₁ à C₁₀ ; p vaut 0 ou 1 ; m et n sont des entiers tels que le rapport m/n soit compris dans la plage de 0,2 à 5 et que la masse moléculaire dudit radical (per)fluoropolyoxyalkylène soit comprise dans la plage de 500 à 10 000.

12. Fluoroélastomères selon les revendications 9 à 11, dans lesquels la quantité de motifs, dans la chaîne, qui dérivent de ces bisoléfines est comprise dans la plage de 0,01 à 1,0 mole pour 100 moles des autres motifs monomères de base.

13. Fluoroélastomères selon les revendications 1 à 12, durcis à l'aide de peroxydes.

14. Fluoroélastomères selon la revendication 13, dans lesquels, dans le mélange durcissable, on ajoute :
(a) des co-agents de durcissement, en des quantités généralement comprises dans la plage de 0,5 à 10 %, de préférence de 1 à 7 % en poids par rapport au polymère, choisis parmi le cyanurate de triallyle ; l'isocyanurate de triallyle (TAIC); la tris(diallylamine)-s-triazine; le phosphite de triallyle ; le N,N-diallylacrylamide ; le N,N,N',N'-tétraallylmalonamide ; l'isocyanurate de trivinyle; le 2,4,6-trivinyl-méthyltrisiloxane; le N,N'-bisallylbicyclo-oct-7-ène-disuccinimide (BOSA); les bisoléfines de Formule (I), les triazines ayant la formule générale 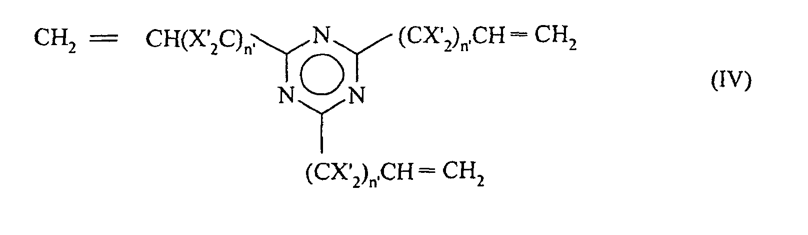 dans laquelle CX'₂, X' et n' sont tels que définis ci-dessus dans la Formule (I),
(b) un composé métallique, en des quantités comprises dans la plage de 1 à 15 % en poids par rapport au polymère, choisi parmi les oxydes ou hydroxydes de métaux divalents, éventuellement en association avec un sel métallique monovalent ou bivalent d'un acide faible organique ou inorganique,
(c) des charges minérales choisies parmi le noir de carbone, le sulfate de baryum, le PTFE ayant une granulométrie inférieure à 300 nm ; éventuellement des polymères de TFE modifiés par des quantités de 0,01 à 10 % en moles d'un vinyléther,
(d) des additifs classiques tels que des épaississants, des pigments, des antioxydants, des stabilisants.

15. Fluoroélastomères selon la revendication 14, dans lesquels le composant (c) est le PTFE, éventuellement des polymères de TFE modifiés par des quantités de 0,01 à 10 % en moles d'un vinyléther, avec une granulométrie comprise dans la plage de 30 à 70 nm.

16. Utilisation des fluoroélastomères selon les revendications 1 à 15 pour préparer des articles manufacturés tels que des canalisations pour carburants, des joints toriques, des joints d'arbres, des garnitures d'étanchéité.

17. Utilisation des fluoroélastomères selon la revendication 16 pour préparer des canalisations pour carburants.

18. Procédé d'obtention de fluoroélastomères selon les revendications 1 à 12, dans lequel la polymérisation des monomères est mise en oeuvre en émulsion aqueuse, en masse ou en suspension.

19. Procédé d'obtention de fluoroélastomères selon la revendication 18, dans lequel la polymérisation des monomères est mise en oeuvre en émulsion aqueuse en présence d'une émulsion, d'une dispersion ou d'une micro-émulsion d'un perfluoropolyoxyalkylène.

20. Procédé d'obtention de fluoroélastomères selon la revendication 19, dans lequel la polymérisation des monomères est mise en oeuvre dans une micro-émulsion d'un perfluoropolyoxyalkylène.
